(19) Europäisches Patentamt
European Patent Office
Office européen des brevets

(11) **EP 1 684 145 B1**

(12) **FASCICULE DE BREVET EUROPEEN**

(45) Date de publication et mention
de la délivrance du brevet:
**29.05.2013 Bulletin 2013/22**

(51) Int Cl.:
***G05D 1/06*** (2006.01)

(21) Numéro de dépôt: **06352001.9**

(22) Date de dépôt: **17.01.2006**

(54) **Procédé de gestion de vol pour un aéronef**

Verfahren zur Fluglenkung für ein Fluggerät

Flight management process for an aircraft

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **19.01.2005 US 644533 P**
**21.01.2005 FR 0500665**
**01.08.2005 FR 0508212**

(43) Date de publication de la demande:
**26.07.2006 Bulletin 2006/30**

(73) Titulaire: **Airbus Operations**
**31060 Toulouse (FR)**

(72) Inventeur: **van Boven, Machiel**
**31400 Toulouse (FR)**

(74) Mandataire: **Santarelli**
**Immeuble Innopolis A**
**2ème étage**
**1149 La Pyrénéenne**
**CS 77697**
**31676 Labège Cedex (FR)**

(56) Documents cités:
**US-A- 3 666 929    US-A- 3 690 598**
**US-A- 4 232 839    US-A- 6 154 693**

**Description**

La présente invention concerne un procédé de gestion de vol, notamment pour l'atterrissage d'un aéronef. Le terme atterrissage comprend la phase d'approche et le toucher des roues sur la piste,

De manière classique un avion, lorsqu'il atterrit, perd de l'attitude et diminue sa vitesse pour passer des conditions de vol en croisière aux conditions d'atterrissage. Au cours de sa descente, l'aéronef prend diverses configurations. Tout d'abord, lors du vol de croisière, la surface extérieure de l'aéronef est la plus lisse possible. Lorsqu'il s'approche du sol, différentes étapes sont prévues au cours desquelles les becs et volets de l'aéronef sortent. De manière classique, un aéronef comporte au moins trois configurations distinctes de sortie des becs et volets.

Pour diminuer les nuisances sonores au sol autour des aéroports, il est déjà connu de modifier la phase d'approche des aéronefs. De manière classique, pour atterrir, un aéronef passe d'une altitude de début de descente à une altitude d'environ 3000 pieds (ft) en conservant une vitesse sensiblement constante. L'angle de trajectoire de vol de l'aéronef en cours de descente est compris par exemple entre -2° et -3°. Lorsqu'il arrive à environ 3000 pieds (cette altitude est donnée à titre d'exemple illustratif et correspond à l'altitude généralement choisie), l'aéronef décélère jusqu'à une vitesse intermédiaire. L'aéronef intercepte alors l'alignement de descente correspondant à l'aéroport et à la piste d'arrivée.

Il est connu, pour diminuer les nuisances sonores au sol, de réaliser une approche CDA (pour "Continuous Descent Approach" soit en français approche en descente continue). Dans ce procédé, il n'y a plus de palier de décélération à altitude constante mals l'avion décélère en même temps qu'il descend et la descente est calculée de manière à intercepter l'alignement de descente de l'aéroport correspondant, sans palier.

Il a été constaté qu'une approche de type CDA était bénéfique notamment pour des gros avions, en ce qui concerne les nuisances sonores au sol pour les riverains des aéroports.

Le document US-3,666,929 a pour but de réduire les nuisances sonores et la consommation de carburant d'un aéronef lors de son atterrissage. Il décrit un système de gestion de vol pour commander un aéronef sur une trajectoire de descente incurvée sans à-coup au cours de la transition d'un premier tronçon linéaire de descente à un deuxième tronçon linéaire de descente. Le système de gestion de vol fournit une information sur l'altitude de l'aéronef pour définir une approximation à la trajectoire de descente incurvée.

La présente invention a pour but de proposer un procédé d'atterrissage pour un aéronef pour lequel la nuisance sonore au sol est minimisée. De préférence, ce procédé permettra une réduction du niveau sonore au sol sensible tant pour des gros avions que pour des avions plus petits.

A cet effet, elle propose un procédé de gestion de vol pour un aéronef et plus particulièrement pour l'atterrissage de cet aéronef, ce dernier comportant des éléments aérodynamiques hypersustentateurs tels des becs et volets mobiles entre une position entièrement rentrée et une position entièrement sortie en passant par des positions intermédiaires, procédé dans lequel l'aéronef part d'une première position correspondant à une altitude appelée altitude de début de descente en volant à une vitesse dite vitesse de début de descente pour arriver à une seconde position d'interception d'un alignement de descente et dans lequel les dispositifs hypersustentateurs de l'aéronef passent de la position entièrement rentrée à une première position intermédiaire sortie puis éventuellement à une seconde position intermédiaire sortie.

Selon l'invention, ce procédé comporte les étapes suivantes :

- décélération à partir de la vitesse de début de descente et de l'altitude de début de descente de l'aéronef lors d'une première phase de descente avec un premier angle de trajectoire de vol, jusqu'à atteindre une vitesse prédéterminée correspondant à une vitesse de l'aéronef à laquelle ses dispositifs hypersustentateurs sortent pour passer dans la première position intermédiaire,
- seconde phase de descente à vitesse sensiblement constante avec un second angle de trajectoire de vol,
- décélération de l'aéronef lors d'une troisième phase de descente avec un troisième angle de trajectoire de vol pour atteindre la position d'interception de l'alignement de descente,

et les dispositifs hypersustentateurs sont sortis pour prendre leur première position intermédiaire sensiblement lors du passage de la seconde à la troisième phase de descente.

Cette procédure est une procédure optimisée qui permet de réduire les nuisances sonores au sol à proximité de la piste d'atterrissage. Elle prévoit de sortir plus tardivement les dispositifs hypersustentateurs que les procédures connues de l'art antérieur. Il s'agit ici par exemple des becs appelés aussi becs de bord d'attaque ("slat" en anglais) ainsi que des volets appelés aussi volets de bord de fuite ou hypersustentateurs ("flap" en anglais). Dans la suite de la description, comme dans les revendications, dans un souci de simplification, on utilisera uniquement les termes de becs et de volets.

L'alignement de descente correspond à la dernière phase de vol de l'aéronef qui est connue de l'homme du métier sous le nom de Glide Slope. Cette dernière phase est en général imposée par des contraintes propres à la piste d'atterrissage.

La première position intermédiaire des dispositifs hypersustentateurs correspond par exemple à une première position de braquage des becs, les volets restant dans leur position rentrée. La seconde position intermédiaire correspond quant à elle par exemple à la sortie des volets, les becs prenant une seconde position de braquage.

Dans le procédé ci-dessus, les premier et troisième angles de trajectoire de vol sont par exemple égaux, et le second angle de trajectoire de vol est de préférence supérieur, en valeur absolue, aux premier et troisième angles de trajectoire de vol.

Pour limiter encore les nuisances sonores lors d'un atterrissage, le procédé de gestion vol selon l'invention prévoit que les dispositifs hypersustentateurs passent dans une seconde position intermédiaire sortie puis dans une troisième position intermédiaire sortie, et que le train d'atterrissage peut n'être sorti que lorsque les dispositifs hypersustentateurs sont passés de la seconde position intermédiaire à la troisième position intermédiaire, qui correspond éventuellement à la position finale d'atterrissage.

Toujours pour limiter les nuisances sonores, il est préférable que les dispositifs hypersustentateurs passent de la position entièrement rentrée qui correspond à la configuration de vol de croisière de l'aéronef dans laquelle la surface extérieure est lisse à la première position intermédiaire lorsque l'aéronef atteint un vitesse GDN inférieure à la vitesse GD habituellement préconisée pour passer dans cette première position intermédiaire. Il est de même préférable que les dispositifs hypersustentateurs passent de la première position intermédiaire à la seconde position intermédiaire lorsque l'aéronef atteint un vitesse SN inférieure à la vitesse S habituellement préconisée pour passer dans cette deuxième position intermédiaire. La vitesse S est la vitesse également préconisée lors d'un décollage pour passer à la configuration dans laquelle les dispositifs hypersustentateurs sont en position entièrement rentrée.

Dans le procédé de gestion de vol selon l'invention, préalablement à un atterrissage, une étape de calcul peut être prévue pour prédéterminer les différentes étapes de l'atterrissage. Ce calcul préalable est par exemple réalisé à rebours et peut comporter les étapes suivantes :

- à partir du niveau de la piste d'atterrissage, détermination d'un premier segment de vol à la vitesse d'atterrissage et un angle de trajectoire de vol correspondant à l'alignement de descente prévu pour ladite piste d'atterrissage et mémorisée dans un système de navigation de l'aéronef,
- à partir d'une altitude prédéterminée d'environ 300 m, calcul d'un second segment de vol avec un même angle de trajectoire de vol de l'accélération à rebours de l'aéronef, avec les moteurs proches du (ou au) ralenti, jusqu'à une altitude d'interception d'alignement de descente, ce calcul tenant compte d'un éventuel changement de configuration des dispositifs hypersustentateurs de l'aéronef à une vitesse fonction notamment du type d'aéronef et de son poids,
- à partir de l'altitude d'interception de l'alignement de descente, calcul d'un troisième segment de vol avec et d'une accélération à rebours, avec les moteurs proches du (ou au) ralenti, jusqu'à ce que l'aéronef arrive à une vitesse prédéterminée correspondant au passage de la configuration lisse externe de l'aéronef à la première position intermédiaire des becs et volets, et détermination de l'altitude correspondante, l'angle de trajectoire de vol étant prédéterminé,
- calcul d'un quatrième segment de la trajectoire de l'aéronef depuis l'altitude déterminée à l'étape précédente, à vitesse constante et les moteurs étant proches du (ou au) ralenti, et
- calcul d'un cinquième segment de trajectoire, dans le sens du déplacement de l'aéronef, depuis le point de départ du début de la trajectoire de descente, pour passer, éventuellement à altitude constante, de la vitesse de l'aéronef en début de descente à la vitesse correspondant au passage de la configuration lisse externe de l'aéronef à la première position intermédiaire des dispositifs hypersustentateurs, et intersection de ce cinquième segment avec le quatrième pour déterminer le début de la trajectoire de descente de l'aéronef.

La présente invention suggère qu'au cours de la trajectoire de descente de l'aéronef vers une piste d'atterrissage, il soit proposé au pilote de passer de la position entièrement rentrée des dispositifs hypersustentateurs à la première position intermédiaire des dispositifs hypersustentateurs de l'aéronef soit à une première vitesse correspondant à la vitesse recommandée de passage à la première position intermédiaire des dispositifs hypersustentateurs, soit à une vitesse, inférieure à la précédente et permettant de réduire le bruit de l'aéronef.

La présente invention suggère également qu'au cours de la trajectoire de descente de l'aéronef vers une piste d'atterrissage, il soit proposé au pilote de passer de la première position intermédiaire des becs et volets de l'aéronef à la seconde position intermédiaire de ces dispositifs hypersustentateurs soit à une première vitesse correspondant à la vitesse recommandée de passage à la seconde position intermédiaire des dispositifs hypersustentateurs, soit à une vitesse, inférieure à la précédente, et permettant de réduire le bruit de l'aéronef.

La présente invention concerne aussi un système de gestion de vol, caractérisé en ce qu'il comporte des moyens adaptés à mettre en oeuvre un procédé tel que décrit ci-dessus ainsi qu'un aéronef comportant un tel système de gestion de vol.

Des détails et avantages de la présente invention ressortiront mieux de la description qui suit, faite en référence aux dessins schématiques annexés, sur lesquels :

La figure 1 est un diagramme représentant l'altitude d'un aéronef en fonction de la distance le séparant de son point d'atterrissage pour des procédures d'atterrissage de l'art antérieur,

La figure 2A est un diagramme correspondant au diagramme de la figure 1 pour une procédure d'atterrissage selon l'invention,

La figure 2B est un diagramme illustrant une variante de la procédure d'atterrissage de la figure 2A,

La figure 3 montre un exemple de profil d'atterrissage selon l'invention indiquant la vitesse et l'altitude de l'aéronef en fonction de la distance le séparant de la piste d'atterrissage, et

La figure 4 illustre pour un modèle d'aéronef donné le gain en termes de bruit obtenu grâce au procédé d'atterrissage optimisé selon l'invention.

Sur la première figure, la procédure d'atterrissage servant de référence est illustrée. Cette procédure est celle prévue classiquement dans un système de gestion de vol d'un aéronef (ou FMS pour "Flight Management System").

Dans la description qui suit, les valeurs d'altitudes données sont à considérer par rapport au terrain : une telle altitude par rapport au terrain est parfois aussi appelée "hauteur".

Dans l'exemple choisi, on suppose que l'aéronef est initialement en début de descente à une vitesse donnée et une altitude de 7000 pieds (soit 2133,6 m). Lorsque cet aéronef veut rejoindre un aéroport, il amorce une première phase de descente dans laquelle, à vitesse constante, il passe d'une altitude de 7000 à 3000 pieds. Une fois arrivé à cette altitude intermédiaire de 3000 pieds, l'aéronef ralentit puis sort progressivement ses becs et volets dans une première position intermédiaire (les volets restent généralement ici en position rentrée) tout en poursuivant sa phase de décélération. Sur les figures, le passage de la configuration où la voilure de l'aéronef est entièrement lisse à la configuration dans laquelle les becs et volets passent dans une première position intermédiaire est indiqué par la référence CONF1. Au cours de cette phase de décélération, la vitesse de l'aéronef diminue jusqu'à descendre en dessous d'une vitesse limite appelée S dans laquelle les becs et volets de l'aéronef passent de leur première position intermédiaire à une seconde position intermédiaire.

L'aéronef intercepte alors l'alignement de descente correspondant à l'aéroport d'arrivée. Au cours de cette dernière phase de vol, les becs et volets de l'aéronef prennent une troisième position de sortie (CONF3) et éventuellement une quatrième position appelée aussi configuration finale de sortie des becs et volets ou CONF FINALE. Cette position finale ainsi que la vitesse d'atterrissage doivent être atteintes au plus tard lorsque l'aéronef se trouve à une altitude de 1000 pieds.

L'angle de trajectoire de vol lors de la première phase de descente (de 7000 à 3000 pieds) est par exemple compris entre -2° et -2,5°. Dans la phase finale d'atterrissage, c'est-à-dire au cours de l'alignement de descente, cet angle de trajectoire de vol est par exemple de -3°.

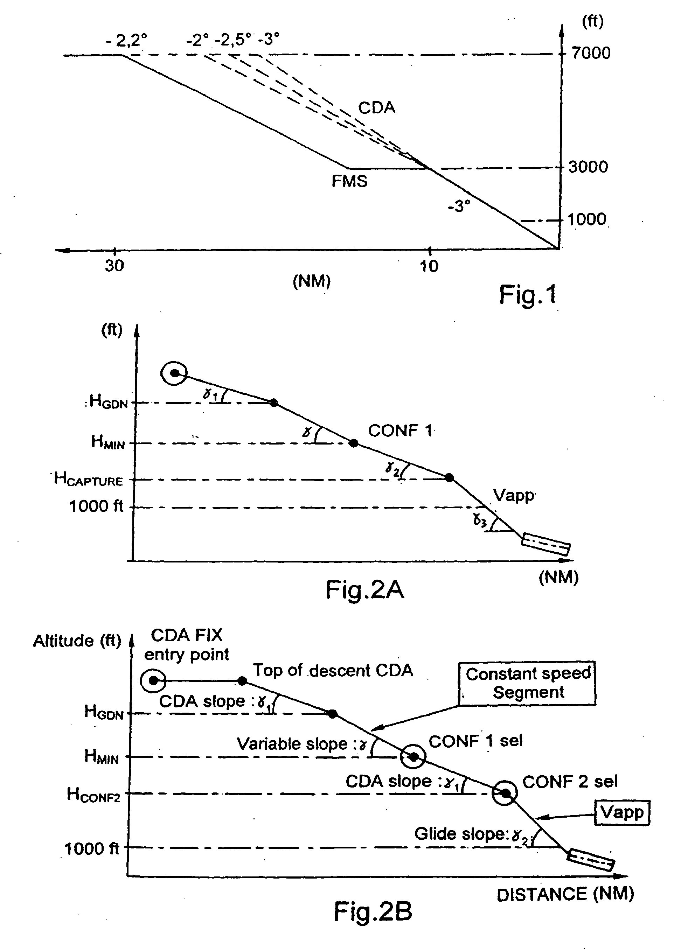

Un autre procédé d'atterrissage est connu sous le nom de CDA (pour "Continuous Descent Approach" soit en français approche de descente continue). Dans une telle approche, les phases de descente à vitesse constante et de décélération à altitude constante sont regroupées dans une même phase de descente avec décélération. Il n'y a pas pour cette approche CDA de palier à altitude constante. L'aéronef descend tout d'abord de son altitude de début de descente (par exemple 7000 pieds) à une altitude d'environ 3000 pieds avec un angle de trajectoire de vol compris par exemple entre -2° et -3°. La figure 1 illustre en pointillés un angle de trajectoire de vol de -2°, un autre de -2,5° et un troisième de -3°. Dans cette approche, l'aéronef passe de sa configuration dans laquelle il présente une surface extérieure lisse (CONF0) à sa première configuration de sortie des becs et volets (CONF1) lorsqu'il atteint une vitesse appelée GD (pour "Green Dot" ou en français point vert). Cette vitesse limite est utilisée tant lors d'une phase d'atterrissage d'un aéronef que lors d'une phase de décollage. Le passage de la première position intermédiaire des becs et volets de l'aéronef à la seconde position intermédiaire des becs et volets de l'aéronef s'effectue lorsque l'aéronef atteint la vitesse S. Ce passage est référencé sur les dessins par CONF2.

Généralement, tant pour une procédure d'atterrissage classique telle celle enregistrée dans un système de gestion de vol d'un aéronef que pour une procédure d'approche CDA, le train d'atterrissage de l'aéronef est sorti après le passage dans la seconde position intermédiaire des becs et volets ou peu après ce passage.

Il a été remarqué que le fait d'utiliser le procédé CDA de base pour atterrir plutôt que d'utiliser le procédé programmé dans le système de gestion de vol était favorable notamment pour des avions long courrier et était quasiment sans impact pour des avions plus petits.

Un tableau ci-après résume une approche de type CDA de base :

| Altitude (en pieds) | Evénement |
|---|---|
| 7000 pieds | Point de départ : moteur au ralenti, surface extérieure lisse (CONF0) trains d'atterrissages rentrés |

(suite)

| Altitude (en pieds) | Evénement |
|---|---|
| 7000 - 3000 pieds | Angle de trajectoire de vol : entre -2° et -3° (de préférence entre -2° et -2,5°)<br>Poussée au ralenti<br>GD $\rightarrow$ CONF1<br>Vitesse S $\rightarrow$ CONF2 |
| Environ 3000 pieds | Interception de l'axe de descente |
| En dessous de 3000 pieds | Si CONF2 $\rightarrow$ sortie des trains d'atterrissage<br>Vitesse F$\rightarrow$ CONF3<br>Vitesse F $\rightarrow$ CONF FINALE<br>Décélération à Vapp |
| Après avoir atteint Vapp, soit au-dessus de 1000 pieds | Descente à vitesse constante Angle de trajectoire de vol -3°<br>Atterrissage |

Le diagramme de la figure 2A illustre une procédure d'atterrissage CDA optimisée. Cette procédure comporte plusieurs étapes décrites ci-après.

On suppose ici que l'aéronef part par exemple également d'une altitude de l'ordre de 7000 pieds. Lors d'une première phase, l'aéronef entame sa descente avec un angle de trajectoire de vol $\gamma_1$. Au cours de cette première phase, l'aéronef décélère jusqu'à une vitesse GDN inférieure à la vitesse GD mentionnée plus haut mais en restant dans sa configuration lisse (CONF0). A la fin de cette première phase de descente, l'aéronef arrive à une altitude $H_{GDN}$, avec la vitesse GDN ($\leq$ GD).

Il entame alors une seconde phase de descente avec un angle de trajectoire de vol de $\gamma$ variable, c'est-à-dire non imposé. En valeur absolue $\gamma$ est généralement supérieur à $\gamma_1$. Au cours de cette seconde phase de descente, la vitesse de l'aéronef est sensiblement constante (du fait que la consigne de vitesse vaut GDN) et l'aéronef descend jusqu'à une altitude $H_{MIN}$. A l'issue de cette seconde phase de descente, les becs et volets de l'aéronef passent dans la première configuration intermédiaire CONF1 : ceci correspond par exemple à la sortie uniquement des becs de l'aéronef avec un premier angle de braquage. Cette seconde phase se termine lorsque l'aéronef atteint l'altitude $H_{MIN}$.

La troisième phase de descente est une phase de décélération. L'angle de trajectoire de vol est par exemple $\gamma_2$. L'aéronef passe alors de l'altitude $H_{MIN}$ à une altitude $H_{CAPTURE}$. A cette dernière altitude, l'aéronef atteint l'axe final d'approche, lequel peut être de type ILS, MLS, GBAS ou SBAS. Dans l'hypothèse d'une interception d'un axe ILS, l'aéronef intercepte alors le faisceau de l'ILS (pour "Instrument Landing System" ou système d'atterrissage aux instruments).

Il entame alors la dernière phase de la procédure d'atterrissage qui est imposée pour chaque aéroport. Au cours de cette dernière phase, la vitesse de l'aéronef décroît jusqu'à Vapp et l'angle de trajectoire de vol est par exemple $\gamma_3$. Au plus tard lorsqu'il atteint une altitude de 1000 pieds, l'aéronef est dans sa configuration finale d'atterrissage.

A titre d'exemple numérique, on peut avoir $\gamma_1$ = -2° ou -2,2° et $\gamma_2$ = -2° ou -3° tandis que $\gamma$ = -2,5°. Généralement, $\gamma_3$ = -3°.

Le tableau ci-après récapitule les différentes données d'une procédure d'atterrissage optimisée selon l'invention :

| Altitude | Evénement pour approche optimisée |
|---|---|
| 7000 pieds | Poussée au ralenti<br>CONF0 : configuration lisse<br>Vitesse< Vitesse de croisière |
| 7000 pieds | Angle de trajectoire de vol : entre -2° ou -2,5° (ou 0°)<br>Poussée réduite<br>Décélération à la vitesse GDN |
| $H_{GDN}$ | Maintien la vitesse constante, angle de trajectoire de vol variable<br>Descente à une altitude $H_{MIN} \rightarrow$ CONF1 |

(suite)

| Altitude | Evénement pour approche optimisée |
|---|---|
| $H_{MIN}$ | Nouvel angle de trajectoire de vol : -2° ou -2,5°<br>Décélération à SN → CONF2 |
| Environ 3000 pieds | Interception de l'axe de descente |
| Inférieur à 3000 pieds | Vitesse F → CONF3 Si CONF3 → sortie des trains d'atterrissage Vitesse F→ CONF FINALE Décélération à Vapp |
| Après atteinte de la vitesse Vapp, soit au -dessus de 1000 pieds | Descente à vitesse constante<br><br>Poussée adaptée à un angle de trajectoire de vol de -3°<br>Procédure finale d'atterrissage |

Dans ce tableau, on a introduit une vitesse GDN et une vitesse SN. On a les égalités suivantes :

$$GDN = GD - \Delta1$$

$$SN = S - \Delta2$$

Les valeurs de $\Delta1$ et $\Delta2$ dépendent notamment de l'aéronef. On a en effet remarqué que pour chaque aéronef il était possible de faire passer les becs et volets dans leur première configuration intermédiaire, respectivement dans leur seconde configuration intermédiaire, à des vitesses respectivement inférieures aux vitesses GD et S habituellement préconisées.

L'altitude $H_{GDN}$ est déterminée à partir de l'altitude du point initial (dans l'exemple choisi 7000 pieds) et de la longueur de décélération nécessaire pour passer de la vitesse au point initial à la vitesse GDN en maintenant un angle de trajectoire de vol prédéterminé.

L'altitude $H_{MIN}$ est une altitude minimale donnée pour un poids d'aéronef afin d'assurer la stabilisation de celui-ci au-dessus ou à une altitude de 1000 pieds au-dessus de la piste d'atterrissage.

Les vitesses GDN et SN ne remplacent pas les vitesses GD et S indiquées précédemment. Il s'agit de vitesses complémentaires qui peuvent être indiquées aux pilotes sur un écran de visualisation comme vitesses alternatives permettant d'obtenir une réduction des bruits (ou vitesses de base pour les procédures de réduction de bruit). Ces vitesses sont alors utilisées uniquement dans les cas où la sécurité et la manoeuvrabilité de l'aéronef ne sont pas détériorées. Ces vitesses (GDN et SN ou bien les valeurs $\Delta1$ et $\Delta2$) sont déterminées en fonction du type d'aéronef ainsi que de la masse de l'aéronef.

On remarque que la vitesse SN peut être atteinte en dessous de 3000 pieds mais toujours bien entendu au-dessus de 1000 pieds.

La procédure d'approche optimisée peut être programmée dans le système de gestion de vol (FMS) de l'aéronef. Les différents paramètres sont calculés à rebours depuis la piste d'atterrissage.

Dans une première étape on considère tout d'abord que la phase d'alignement de descente ("Glide Slope" en anglais) est respectée. Ce segment géométrique est parcouru avec une vitesse Vapp depuis la piste d'atterrissage jusqu'à une altitude de 1000 pieds au dessus de celle-ci à une pente $\gamma_3$ qui est classiquement de -3°, ou toute autre pente indiquée par la procédure agréée avec le contrôleur du trafic aérien. Au-delà de 1000 pieds, on considère que les moteurs sont proches du ralenti et on détermine la vitesse au point d'intersection de l'alignement de descente (par exemple 3000 pieds ou bien $H_{CAPTURE}$). On tient compte ici éventuellement du passage de la première position intermédiaire des becs et volets dans leur seconde position intermédiaire. Il faut considérer ici que ce passage se fait à une vitesse inférieure à SN (et non pas S) afin de tenir compte du temps de déploiement des becs et volets.

Toujours en calculant à rebours, à partir de l'altitude de capture de l'alignement de descente et de la vitesse de l'aéronef à cet endroit, on détermine l'altitude $H_{MIN}$ dans laquelle l'aéronef vole à une vitesse GDN et passe de la position dans laquelle les becs (et volets) sont dans leur première position intermédiaire à la configuration extérieure lisse (becs et volets rentrés), tout en tenant compte du temps de déploiement des becs et volets.

On considère que ce segment est parcouru avec un angle de trajectoire de vol constant $\gamma_2$ compris par exemple entre -2° et -2,5°. Cet angle de trajectoire de vol est choisi à la fois aussi élevé que possible en valeur absolue pour éloigner le plus possible la trajectoire de survol et suffisamment faible pour permettre une décélération optimale (suffisamment forte pour ne pas allonger inconsidérablement la trajectoire de vol) jusqu'à la vitesse GDN et peut dépendre par exemple du poids et du type de l'aéronef.

Les calculs du troisième et du dernier segment sont liés. En effet, à partir de la position géométrique de début de descente de l'avion (altitude, position longitudinale), des vitesses de début de descente et du second segment GDN et de la pente $\gamma_1$, on calcule l'écart d'altitude entre l'altitude de début de descente et l'altitude de fin de troisième segment $H_{GDN}$ ainsi que la longueur du segment nécessaire pour que l'avion atteigne, à partir de l'altitude de début de descente, l'altitude $H_{GDN}$ à la vitesse GDN, ce qui permet de fixer l'altitude $H_{GDN}$ et donc la fin du troisième segment.

Dans cette troisième étape de calcul on considère que l'aéronef monte, à une vitesse constante correspondant à la vitesse GDN, à une l'altitude $H_{GDN}$. On considère ici, lors du passage de l'altitude $H_{MIN}$ à l'altitude $H_{GDN}$ que les moteurs sont proches du ralenti, avec une marge de poussée lors de la conception du profil permettant d'absorber, lors de l'approche effective, des imprécisions liées à la connaissance de la masse de l'avion, à celle du modèle de vent utilisé par le FMS, à celle des calculs et à celle du guidage effectif. L'angle de trajectoire de vol est par exemple de -3°.

Une variante de procédure d'atterrissage CDA optimisée est représentée à la figure 2B. Les parties de trajectoire communes aux figures 2A et 2B, ainsi que les étapes de calcul correspondantes (trois premières étapes ci-dessus), ne seront pas décrites à nouveau.

Selon cette variante, dans une quatrième étape de calcul, on considère pour définir le profil que l'avion monte à la pente $\gamma_1$ définie précédemment, en accélérant, jusqu'à rejoindre l'altitude programmée du début du CDA à une vitesse inférieure à celle de fin de descente.

Au cours du cinquième et dernier segment prévu dans ce mode de réalisation, l'avion accélère en palier jusqu'à atteindre la vitesse de fin de descente, puis continue à vitesse constante jusqu'au point où l'aéronef entame sa procédure de CDA optimisée, dit *"CDA Fix Entry point"*. La vitesse de fin de descente sus-mentionnée est contrôlée directement ou indirectement par l'équipage, soit dictée par l'équipage, soit par le système de gestion de vol (FMS), résultant des optimisations classiques effectuées par ce dernier, par exemple en satisfaisant un critère durée de vol / consommation de carburant, ou en satisfaisant une heure d'arrivée imposée, par exemple au point "*CDA Fix Entry Point*".

Il n'est pas question ici de supprimer des valeurs telles GD et S par exemple de la mémoire du système de gestion de vol de l'aéronef. Il convient ici de rajouter des valeurs GDN et SN dans cette mémoire. En effet, d'une part les valeurs GD et S sont utilisées non seulement à l'atterrissage mais également en phase de décollage et d'autre part dans certaines conditions de vol, il est peut-être nécessaire, pour des raisons de sécurité et/ou de confort de sortir les becs à la vitesse GD et les volets à la vitesse S (et non pas GDN et SN).

Pour le passage à une configuration donnée, correspondant à une position intermédiaire de sortie des becs et volets, il existe une vitesse de passage préconisée ainsi qu'une vitesse VLS (pour "Vitesse Limite de Sélection") en dessous de laquelle le passage à la configuration considérée ne doit pas être réalisé (notamment pour des raisons de sécurité de vol). Ces plages de vitesse dépendent du type de l'aéronef ainsi que de sa masse.

A titre d'exemple, supposons que pour un aéronef d'une masse de 180 tonnes la vitesse classique GD recommandée pour sortir les becs (passage à CONF1) soit de 230 kt (1 kt = 1,852 km/h). La vitesse minimale de passage à la première position intermédiaire des becs et volets (CONF1) est par exemple VLS1 = 195 kt. La longueur de l'intervalle de vitesse dans lequel le passage à CONF1 est possible est de 35 kt. Pour limiter les nuisances sonores au sol, il convient de choisir une vitesse GDN la plus proche possible de VLS1. Toutefois, pour des raisons de sécurité et de manoeuvrabilité, une marge doit être conservée. Dans un tel cas, on pourra choisir GDN = 215 kt (soit GDN = VLS1 + 20 kt). On a alors, par rapport à des équations définies plus haut, $\Delta 1$ = 15 kt.

Pour ce même avion, la vitesse S correspondant à la sortie des volets et donc le passage à la seconde position intermédiaire des becs et volets (CONF2) est par exemple de 186 kt. La vitesse minimale pour passer à CONF2 est par exemple VLS2 = 161 kt. On choisi ici par exemple SN = 166 kt.

Le système de gestion de vol proposé ici comporte de manière classique un clavier alphanumérique et un dispositif de contrôle et d'affichage multifonctions (MCDU pour "Multi function Control and Display Unit"). Durant les phases de décollage et d'atterrissage, la vitesse GD est affichée sur le MCDU. L'invention propose ici une forme de réalisation prévoyant que lors d'une phase d'atterrissage le MCDU affiche également la vitesse GDN permettant de réduire le bruit de l'aéronef en volant en position lisse. Les procédures spécifiques à l'invention sont aussi stockées par exemple dans des bases de données de navigation contenant les procédures spécifiques aux aéroports. Les informations de vitesses sont affichées sur le PFD (Primary Flight Display : écran de présentation d'informations concernant le vol).

Il est rappelé ici que la vitesse GD (ou Green Dot) est à l'origine la vitesse qui, lorsqu'un moteur est en panne, permet le meilleur taux de montée. Cette vitesse est également généralement utilisée comme vitesse finale de décollage. C'est également dans l'art antérieur la vitesse recommandée à partir de laquelle les becs (et/ou éventuellement volets) d'un aéronef peuvent être sortis lors d'une approche d'un terrain d'atterrissage.

De même, la vitesse S sert tant au décollage qu'à l'atterrissage. Au décollage il s'agit de la vitesse au-dessus de laquelle la configuration extérieure de l'aéronef peut être entièrement lisse (passage à CONF0). Lors de l'atterrissage, il s'agit de la vitesse classique pour la sortie des volets (c'est-à-dire passage à CONF2).

Il existe également des vitesses recommandées pour le passage à la troisième position intermédiaire des becs et volets (CONF3) ainsi que pour le passage à la configuration finale dans laquelle les becs et volets sont entièrement sortis. Ces vitesses sont utilisées uniquement lors de l'atterrissage. De même que la vitesse S, ces vitesses sont par exemple affichées sur le MCDU. Il est proposé ici d'afficher également la vitesse SN sur ce dispositif, comme pour la vitesse GDN.

Il est rappelé ici que les trains d'atterrissages sont sortis de préférence après le passage à la troisième position intermédiaire des becs et volets, soit CONF3.

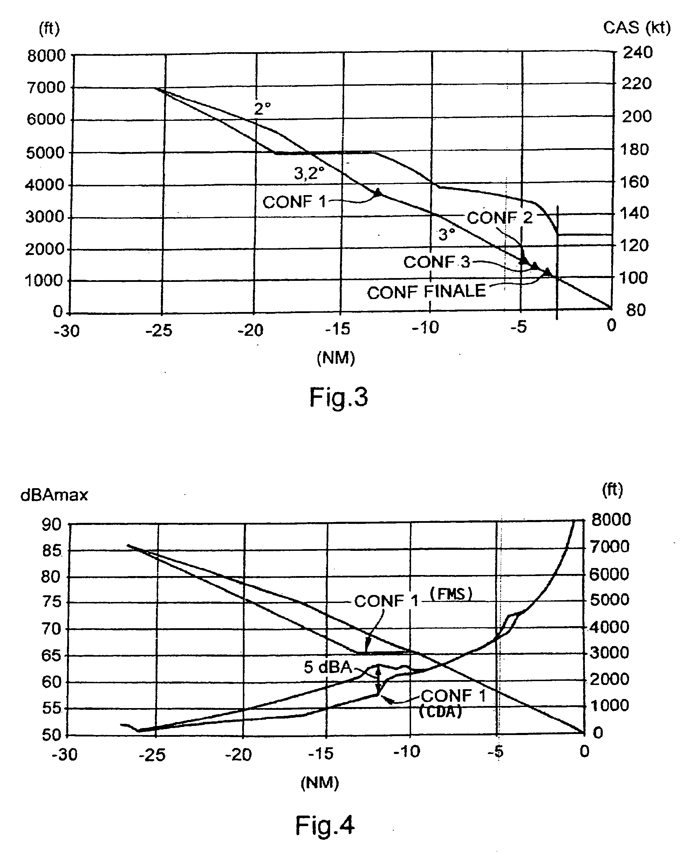

La procédure d'approche sur une piste d'atterrissage décrite ci-dessus permet de limiter sensiblement les bruits au sol à proximité de cette piste d'atterrissage. La figure 4 illustre le gain obtenu. Sur cette figure, on a représenté pour mémoire la trajectoire de l'aéronef, c'est-à-dire l'altitude de l'aéronef par rapport à la distance de la piste d'atterrissage et d'autre part le bruit au sol en fonction également de la distance de la piste d'atterrissage. De manière logique, les courbes concernant le bruit se chevauchent d'une part lorsque l'aéronef est en vol de croisière et au début de la descente et d'autre part au moment de l'atterrissage puisque la procédure d'atterrissage n'influe pas sur le dernier segment de vol avant d'atteindre la piste d'atterrissage. L'alignement de descente de fin de vol (Glide Slope) n'est pas modifié lors d'une procédure d'atterrissage selon l'invention.

Le procédé selon l'invention permet également une réduction de la consommation de carburant de l'aéronef.

La présente invention ne se limite pas à la forme de réalisation préférée décrite ci-dessus à titre d'exemple non limitatif. Elle concerne également toutes les variantes de réalisation à la portée de l'homme du métier dans le cadre des revendications ci-après.

## Revendications

1. Procédé de gestion de vol pour un aéronef, notamment pour l'atterrissage de cet aéronef, ce dernier comportant des éléments aérodynamiques hypersustentateurs tels des becs et volets mobiles entre une position entièrement rentrée (CONF0) et une position entièrement sortie (CONF3, CONF FINALE) en passant par des positions intermédiaires (CONF2, CONF3), procédé dans lequel l'aéronef part d'une première position correspondant à une altitude appelée altitude de début de descente en volant à une vitesse dite vitesse de début de descente pour arriver à une seconde position d'interception d'un alignement de descente et dans lequel les dispositifs hypersustentateurs de l'aéronef passent de la position entièrement rentrée (CONF0) à une première position intermédiaire sortie (CONF1) puis éventuellement à une seconde position intermédiaire sortie (CONF2),
   **caractérisé en ce qu'**il comporte les étapes suivantes :

   - décélération à partir de la vitesse de début de descente et de l'altitude de début de descente de l'aéronef lors d'une première phase de descente avec un premier angle de trajectoire de vol ($\gamma_1$), jusqu'à atteindre une vitesse prédéterminée correspondant à une vitesse de l'aéronef à laquelle ses dispositifs hypersustentateurs sortent pour passer dans la première position intermédiaire (CONF1),
   - seconde phase de descente à vitesse sensiblement constante avec un second angle de trajectoire de vol ($\gamma$),
   - décélération de l'aéronef lors d'une troisième phase de descente avec un troisième angle de trajectoire de vol ($\gamma_2$) pour atteindre la position d'interception de l'alignement de descente,

   et **en ce que** les dispositifs hypersustentateurs sont sortis pour prendre leur première position intermédiaire (CONF1) sensiblement lors du passage de la seconde à la troisième phase de descente.

2. Procédé de gestion de vol selon la revendication 1, **caractérisé en ce que** les premier et troisième angles de trajectoire de vol ($\gamma_1$, $\gamma_2$) sont égaux, et **en ce que** le second angle de trajectoire de vol ($\gamma$) est supérieur, en valeur absolue, aux premier et troisième angles de trajectoire de vol ($\gamma_1$, $\gamma_2$).

3. Procédé de gestion vol selon l'une des revendications 1 ou 2, **caractérisé en ce que** les dispositifs hypersustentateurs passent dans une seconde position intermédiaire sortie (CONF2) puis dans une troisième position intermédiaire sortie (CONF3), et **en ce que** le train d'atterrissage n'est sorti que lorsque les dispositifs hypersustentateurs sont dans cette troisième position intermédiaire (CONF3), qui correspond éventuellement à la position finale d'atterrissage.

4. Procédé de gestion de vol selon l'une des revendications 1 à 3, **caractérisé en ce que** les becs et volets passent dans leur première configuration intermédiaire (CONF 1) lorsque l'aéronef atteint une vitesse GDN inférieure à la vitesse GD habituellement préconisée pour passer dans cette première position intermédiaire.

**5.** Procédé de gestion de vol selon l'une des revendications 1 à 4, **caractérisé en ce que** les dispositifs hypersustentateurs assent dans leur seconde position intermédiaire (CONF2) lorsque l'aéronef atteint une vitesse SN inférieure à la vitesse S habituellement préconisée pour passer dans cette seconde position Intermédiaire.

**6.** Procédé de gestion de vol selon l'une des revendications 1 à 5, **caractérisé en ce que** préalablement à un atterrissage, une étape de calcul est prévue pour prédéterminer les différentes étapes de l'atterrissage.

**7.** Procédé de gestion de vol selon la revendication 6, **caractérisé en ce que** le calcul préalable est un calcul réalisé à rebours et comporte les étapes suivantes :

- à partir du niveau de la piste d'atterrissage, détermination d'un premier segment de vol à la vitesse d'atterrissage (Vapp) et un angle de trajectoire de vol correspondant à l'alignement de descente prévu pour ladite piste d'atterrissage et mémorisée dans un système de navigation de l'aéronef,
- à partir d'une altitude prédéterminée d'environ 300 m, calcul d'un second segment de vol avec un même angle de trajectoire de vol de l'accélération à rebours de l'aéronef, avec les moteurs proches du ralenti, jusqu'à une altitude ($H_{CAPTURE}$) d'interception d'alignement de descente, ce calcul tenant compte d'un éventuel changement de configuration des dispositifs hypersustentateurs de l'aéronef à une vitesse fonction notamment du type d'aéronef et de son poids.
- à partir de l'altitude d'interception ($H_{CAPTURE}$) de l'alignement de descente, calcul d'un troisième segment de vol avec et d'une accélération à rebours, avec les moteurs proches du (ou au) ralenti, jusqu'à ce que l'aéronef arrive à une vitesse prédéterminée (GDN) correspondant au passage de la configuration lisse externe (CONFO) de l'aéronef à la première position intermédiaire des dispositifs hypersustentateurs (CONF1), et détermination de l'altitude ($H_{MIN}$) correspondante, l'angle de trajectoire de vol étant prédéterminé,
- calcul d'un quatrième segment de la trajectoire de l'aéronef depuis l'altitude ($H_{MIN}$) déterminée à l'étape précédente, à vitesse constante (GDN) et les moteurs étant proches du (ou au) ralenti, et
- calcul d'un cinquième segment de trajectoire, dans le sens du déplacement de l'aéronef, depuis le point de départ du début de la trajectoire de descente, pour passer, éventuellement à altitude constante, de la vitesse de l'aéronef en début de descente à la vitesse (GDN) correspondant au passage de la configuration lisse externe de l'aéronef à la première position intermédiaire des dispositifs hypersustentateurs, et intersection de ce cinquième segment avec le quatrième pour déterminer le début de la trajectoire de descente de l'aéronef.

**8.** Procédé de gestion de vol selon l'une des revendications 1 à 7, **caractérisé en ce qu'**au cours de la trajectoire de descente de l'aéronef vers une piste d'atterrissage, il est proposé au pilote de passer de la configuration externe lisse (CONF0) de l'aéronef à la première position intermédiaire des dispositifs hypersustentateurs (CONF1) soit à une première vitesse (GD) correspondant à la vitesse recommandée de passage à la première position Intermédiaire des dispositifs hypersustentateurs, soit à une vitesse (GDN), inférieure à la précédente, et permettant de réduire le bruit de l'aéronef.

**9.** Procédé de gestion de vol selon l'une des revendications 1 à 8, **caractérisé en ce qu'**au cours de la trajectoire de descente de l'aéronef vers une piste d'atterrissage, il est proposé au pilote de passer de la première position intermédiaire des dispositifs hypersustentateurs (CONF1) de l'aéronef à la seconde position intermédiaire de ces dispositifs hypersustentateurs (CONF2) soit à une première vitesse (S) correspondant à la vitesse recommandée de passage à la seconde position intermédiaire des dispositifs hypersustentateurs, soit à une vitesse (SN), inférieure à la précédente, et permettant de réduire le bruit de l'aéronef.

**Patentansprüche**

**1.** Flugsteuerungsverfahren für ein Luftfahrzeug, insbesondere für die Landung dieses Luftfahrzeugs, wobei letzteres aerodynamische Hochauftriebselemente, wie Slats und Klappen umfasst, die zwischen einer vollständig eingefahrenen Position (CONFO) und, über Zwischenpositionen (CONF2, CONF3) hinweg, einer vollständig ausgefahrenen Position (CONF3, CONF FINALE) beweglich sind, Verfahren, bei dem das Luftfahrzeug aus einer ersten Position, die einer Höhe, der sogenannten Sinkflugbeginnhöhe, entspricht, mit einer Geschwindigkeit, der sogenannten Sinkflugbeginngeschwindigkeit fliegend, in eine zweite Gleitflugabfangposition gelangt, und bei dem die Hochauftriebsvorrichtungen des Luftfahrzeugs von der vollständig eingefahrenen Position (CONFO) in eine erste ausgefahrene Zwischenposition (CONF1), anschließend eventuell in eine zweite ausgefahrene Zwischenposition (CONF2) übergehen,
**dadurch gekennzeichnet, dass** es die folgenden Schritte umfasst:

- Verlangsamung ab der Sinkflugbeginngeschwindigkeit und der Sinkflugbeginnhöhe des Luftfahrzeugs während einer ersten Sinkflugphase, mit einem ersten Flugbahnwinkel ($\gamma_1$), bis zum Erreichen einer vorbestimmten Geschwindigkeit, die einer Geschwindigkeit des Luftfahrzeugs entspricht, bei der seine Hochauftriebsvorrichtungen ausfahren, um in die erste Zwischenposition (CONF1) zu gelangen,
- zweite Sinkflugphase mit im Wesentlichen konstanter Geschwindigkeit, mit einem zweiten Flugbahnwinkel ($\gamma$),
- Verlangsamung des Luftfahrzeugs während einer dritten Sinkflugphase, mit einem dritten Flugbahnwinkel ($\gamma_2$), um die Gleitflugabfangposition zu erreichen,

und dass die Hochauftriebsvorrichtungen ausgefahren werden, um im Wesentlichen beim Übergang von der zweiten in die dritte Sinkflugphase ihre erste Zwischenposition (CONF1) einzunehmen.

2. Flugsteuerungsverfahren nach Anspruch 1, **dadurch gekennzeichnet, dass** der erste und der dritte Flugbahnwinkel ($\gamma_1$, $\gamma_2$) gleich sind und dass der zweite Flugbahnwinkel ($\gamma$) im Absolutwert größer als der erste und der dritte Flugbahnwinkel ($\gamma_1$, $\gamma_2$) ist.

3. Flugsteuerungsverfahren nach einem der Ansprüche 1 oder 2, **dadurch gekennzeichnet, dass** die Hochauftriebsvorrichtungen in eine zweite ausgefahrene Zwischenposition (CONF2), anschließend in eine dritte ausgefahrene Zwischenposition (CONF3) übergehen und dass das Fahrwerk erst dann ausgefahren wird, wenn die Hochauftriebsvorrichtungen sich in dieser dritten Zwischenposition (CONF3), die eventuell der endgültigen Landeposition entspricht, befinden.

4. Flugsteuerungsverfahren nach einem der Ansprüche 1 bis 3, **dadurch gekennzeichnet, dass** die Slats und Klappen in ihre erste Zwischenstellung (CONF1) übergehen, wenn das Luftfahrzeug eine Geschwindigkeit GDN erreicht, die geringer als die Geschwindigkeit GD ist, welche üblicherweise empfohlen wird, um in diese erste Zwischenposition überzugehen.

5. Flugsteuerungsverfahren nach einem der Ansprüche 1 bis 4, **dadurch gekennzeichnet, dass** die Hochauftriebsvorrichtungen in ihre zweite Zwischenposition (CONF2) übergehen, wenn das Luftfahrzeug eine Geschwindigkeit SN erreicht, die geringer als die Geschwindigkeit S ist, welche üblicherweise empfohlen wird, um in diese zweite Zwischenposition überzugehen.

6. Flugsteuerungsverfahren nach einem der Ansprüche 1 bis 5, **dadurch gekennzeichnet, dass** vor einer Landung ein Rechenschritt vorgesehen ist, um die verschiedenen Schritte der Landung vorzubestimmen.

7. Flugsteuerungsverfahren nach Anspruch 6, **dadurch gekennzeichnet, dass** die vorherige Berechnung eine rückwärts vollzogene Berechnung ist und die folgenden Schritte umfasst:

- ab der Ebene der Landebahn, Bestimmen eines ersten Flugsegments mit der Landegeschwindigkeit (Vapp) und einem Flugbahnwinkel, der dem für die Landebahn vorgesehenen und in einem Navigationssystem des Luftfahrzeugs gespeicherten Gleitflug entspricht,
- ab einer vorbestimmten Höhe von etwa 300 m, Berechnen eines zweiten Flugsegments mit einem gleichen Flugbahnwinkel und einer Rückwärtsbeschleunigung des Luftfahrzeugs, mit den Triebwerken nahe dem Leerlauf, bis zu einer Gleitflugabfanghöhe ($H_{CAPTURE}$), wobei diese Berechnung einer eventuellen Änderung der Stellung der Hochauftriebsvorrichtungen des Luftfahrzeugs bei einer Geschwindigkeit, die insbesondere von der Art des Luftfahrzeugs und dessen Gewicht abhängt, Rechnung trägt,
- ab der Gleitflugabfanghöhe ($H_{CAPTURE}$), Berechnen eines dritten Flugsegments mit einer und einer Rückwärtsbeschleunigung, mit den Triebwerken nahe dem (oder im) Leerlauf, bis das Luftfahrzeug eine vorbestimmte Geschwindigkeit (GDN) erreicht, die dem Übergang von der glatten Außengestalt (CONFO) des Luftfahrzeugs in die erste Zwischenposition der Hochauftriebsvorrichtungen (CONF1) entspricht, und Bestimmen der entsprechenden Höhe ($H_{MIN}$), wobei der Flugbahnwinkel vorbestimmt ist,
- Berechnen eines vierten Segments der Flugbahn des Luftfahrzeugs von der bei dem vorhergehenden Schritt bestimmten Höhe ($H_{MIN}$) aus, mit konstanter Geschwindigkeit (GDN) und wobei die Triebwerke nahe dem (oder im) Leerlauf sind, und
- Berechnen eines fünften Flugbahnsegments in der Bewegungsrichtung des Luftfahrzeugs, von dem Ausgangspunkt des Beginns der Sinkflugbahn aus, um - eventuell bei konstanter Höhe - von der Geschwindigkeit des Luftfahrzeugs bei Sinkflugbeginn zu der Geschwindigkeit (GDN), die dem Übergang von der glatten Außengestalt des Luftfahrzeugs in die erste Zwischenposition der Hochauftriebsvorrichtungen entspricht, überzugehen, und Schneiden dieses fünften Segments mit dem vierten, um den Beginn der Sinkflugbahn des Luftfahrzeugs zu bestimmen.

**8.** Flugsteuerungsverfahren nach einem der Ansprüche 1 bis 7, **dadurch gekennzeichnet, dass** im Laufe der Sinkflugbahn des Luftfahrzeugs in Richtung einer Landebahn dem Piloten vorgeschlagen wird, von der glatten Außengestalt (CONFO) des Luftfahrzeugs in die erste Zwischenposition der Hochauftriebsvorrichtungen (CONF1) entweder mit einer ersten Geschwindigkeit (GD), die der empfohlenen Geschwindigkeit für den Übergang in die erste Zwischenposition der Hochauftriebsvorrichtungen entspricht, oder mit einer Geschwindigkeit (GDN) überzugehen, welche geringer als die vorhergehende ist und ermöglicht, das Geräusch des Luftfahrzeugs zu mindern.

**9.** Flugsteuerungsverfahren nach einem der Ansprüche 1 bis 8, **dadurch gekennzeichnet, dass** im Laufe der Sinkflugbahn des Luftfahrzeugs in Richtung einer Landebahn dem Piloten vorgeschlagen wird, von der ersten Zwischenposition der Hochauftriebsvorrichtungen (CONF1) des Luftfahrzeugs in die zweite Zwischenposition dieser Hochauftriebsvorrichtungen (CONF2) entweder mit einer ersten Geschwindigkeit (S), die der empfohlenen Geschwindigkeit für den Übergang in die zweite Zwischenposition der Hochauftriebsvorrichtungen entspricht, oder mit einer Geschwindigkeit (SN) überzugehen, welche geringer als die vorhergehende ist und ermöglicht, das Geräusch des Luftfahrzeugs zu mindern.

**Claims**

**1.** A flight management method for an aircraft, in particular for landing said aircraft, the latter comprising high lift aerodynamic members such as slats and flaps which are movable between a fully retracted position (CONFO) and a fully extended position (CONF3, FINAL CONF) through intermediate positions (CONF2, CONF3), in which method the aircraft starts from a first position corresponding to an altitude called begin descent altitude while flying at a speed called begin descent speed to reach a second position that intercepts a glide slope and in which the high lift devices of the aircraft pass from the fully retracted position (CONFO) to a first extended intermediate position (CONF1) then possibly to a second extended intermediate position (CONF2),
**characterized in that** it comprises the following steps:

- decelerating from the begin descent speed and the begin descent altitude of the aircraft during a first descent phase with a first flight path angle ($\gamma_1$) until a predetermined speed is reached corresponding to an aircraft speed at which its high lift devices extend to pass to the first intermediate position (CONF1),
- performing a second phase of descent at a substantially constant speed with a second flight path angle ($\gamma$),
- decelerating the aircraft during a third phase of descent with a third flight path angle ($\gamma_2$) to reach the glide slope interception position,

and **in that** the high lift devices are extended to assume their first intermediate position (CONF1) substantially during the passage from the second to the third phase of descent.

**2.** A flight management method according to claim 1, **characterized in that** the first and third flight path angles ($\gamma_1$, $\gamma_2$) are equal, and **in that** the second flight path angle ($\gamma$) is greater, in absolute value, than the first and third flight path angles ($\gamma_1$, $\gamma_2$).

**3.** A flight management method according to one of claims 1 or 2 **characterized in that** the high lift devices pass to a second extended intermediate position (CONF2) then to a third extended intermediate position (CONF3), and **in that** the landing gear is only extended when the high lift devices are in said third intermediate position (CONF3), which may correspond to the final landing position.

**4.** A flight management method according to one of claims 1 to 3, **characterized in that** the slats and flaps pass to their first intermediate configuration (CONF1) when the aircraft reaches a speed GDN lower than the speed GD usually recommended to pass to said first intermediate position.

**5.** A flight management method according to one of claims 1 to 4, **characterized in that** the high lift devices pass to their second intermediate position (CONF2) when the aircraft reaches a speed SN lower than the speed S usually recommended to pass to said second intermediate position.

**6.** A flight management method according to one of claims 1 to 5, **characterized in that** prior to landing, a calculation step is provided to predetermine the various landing steps.

7. A flight management method according to claim 6, **characterized in that** the prior calculation is a backward calculation and comprises the following steps:

   - from the landing strip level, determining a first flight segment at the landing speed (Vapp) and a flight path angle corresponding to the glide slope provided for said landing strip and that is stored in a navigation system of the aircraft;
   - from a predetermined altitude of about 300 m, calculating a second flight segment with the same flight path angle for a backward acceleration of the aircraft, with the engines close to idling, to a glide slope interception altitude ($H_{CAPTURE}$), this calculating taking into account a possible change in configuration of the high lift devices of the aircraft at a speed that depends on the type of aircraft and its weight;
   - from the glide slope interception altitude ($H_{CAPTURE}$), calculating a third flight segment with and for a backward acceleration, with the engines close to (or at) idling, until the aircraft reaches a predetermined speed (GDN) corresponding to the passage of the external smooth configuration (CONFO) of the aircraft at the first intermediate position of the high lift devices (CONF1), and determining the corresponding altitude ($H_{MIN}$), the flight path angle being predetermined,
   - calculating a fourth segment of the aircraft path from the altitude ($H_{MIN}$) determined during the previous phase, at constant speed (GDN) and with the engines close to (or at) idling, and
   - calculating a fifth path segment, in the direction of travel of the aircraft, from the starting point of the beginning of the descent path, to pass, possibly at constant altitude, from the aircraft speed at the beginning of descent to the speed (GDN) corresponding to the passage from the external smooth configuration of the aircraft to the first intermediate position of the high lift devices, and intersecting said fifth segment with the fourth to determine the beginning of the descent path of the aircraft.

8. A flight management method according to one of claims 1 to 7, **characterized in that**, during the descent path of the aircraft to a landing strip, it is proposed to the pilot to pass from the smooth external configuration (CONFO) of the aircraft to the first intermediate position (CONF1) of the high lift devices either at a first speed (GD) corresponding to the speed recommended for passage to the first intermediate position of the high lift devices, or at a speed (GDN) lower than the preceding one, and that permits the aircraft noise to be reduced.

9. A flight management method according to one of claims 1 to 8, **characterized in that** during the descent path of the aircraft towards a landing strip, it is proposed to the pilot to pass from the first intermediate position (CONF1) of the high lift devices of the aircraft to the second intermediate position (CONF2) of said high lift devices either at a first speed (S) corresponding to the recommended speed for passing to the second intermediate position of the high lift devices, or at a speed (SN) lower than the preceding one, and that permits the aircraft noise to be reduced.

Fig.1

Fig.2A

Fig.2B

Fig.3

Fig.4

**EP 1 684 145 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3666929 A